# EUROPÄISCHE PATENTANMELDUNG

(11) **EP 2 284 503 A1**
(43) Veröffentlichungstag der Anmeldung: **16.02.2011**
(21) Anmeldenummer: 10012054.2
(22) Anmeldetag: 03.07.2002
(51) Int. Cl.: G01F 23/292, G01N 35/10, G01N 35/02, G01B 11/02, G01S 17/02, G02B 21/00

(54) **Vorrichtung und Verfahren zur Ermittlung der Lage des Flüssigkeitsspiegels in Gefäßen und der Lage und/oder Identität von Objekten**

(30) Priorität: 24.08.2001 DE 10141544
(62) Teilanmeldung aus: 02014681.7
(71) Anmelder: EPPENDORF AG, 22339 Hamburg (DE)
(72) Erfinder: Spolaczyk, Reiner, 22397 Hamburg (DE)
(74) Vertreter: Siemons, Norbert

(57) **Zusammenfassung**

Vorrichtung zur Ermittlung der Lage des Flüssigkeitsspiegels in Gefäßen an einer Vorrichtung zur Behandlung von Flüssigkeiten mit
- einer Beleuchtungseinrichtung zum Beleuchten einer punktförmigen Beleuchtungsstelle,
- einer punktförmigen Lichtempfangseinrichtung,
- einem abbildenden System zum Abbilden der Beleuchtungsstelle,
- einer Auswerteeinrichtung zum Erfassen der Annäherung einer Grenzfläche zwischen zwei Medien mit unterschiedlichen Brechzahlen an die Beleuchtungsstelle,
- einer Verstelleinrichtung zum Verstellen der relativen Lage von Beleuchtungsstelle und Grenzfläche in Richtung der optischen Achse des abbildenden Systems, wobei
- die Auswerteeinrichtung zur Steuerung des Verstellens der relativen Lage von Beleuchtungsstelle und Grenzfläche durch die Verstelleinrichtung ausgebildet ist,
- die Beleuchtungseinrichtung ebenfalls ein abbildendes System umfasst, das das Licht einer punktförmigen Lichtquelle auf die Beleuchtungsstelle abbildet, und
- das Licht der punktförmigen Lichtquelle über einen Strahlteiler dem abbildenden System zugeführt wird und dasselbe abbildende

System die Beleuchtungsstelle über den Strahlteiler auf die
Lichtempfangseinrichtung abbildet, wobei
- der Abstand der Beleuchtungsstelle von dem abbildenden System 100 mm oder mehr beträgt.

## Beschreibung

Die Erfindung bezieht sich auf eine Vorrichtung und ein Verfahren zur Ermittlung der Lage des Flüssigkeitsspiegels in Gefäßen und zur Ermittlung der Lage und/oder Identität von Objekten.

Eine Vorrichtung zum Behandeln von Flüssigkeiten kann insbesondere eine Vorrichtung zum Dosieren und/oder Transportieren und/oder Untersuchen und/oder Bearbeiten (z.B. chemisch, physikalisch oder biologisch) von Flüssigkeiten sein. Bei bekannten Vorrichtungen werden die Abläufe entweder manuell oder zum Teil oder vollständig automatisiert durchgeführt. So sind beispielsweise für das Dosieren manuelle Pipetten, PC-unterstützte Dosiersysteme und vollautomatische Dosierstationen bekannt. Für das Dosieren, Transportieren, Untersuchen und Behandeln von Flüssigkeiten gibt es vollautomatische Behandlungsstationen (sogenannte "Workstations").

Sowohl beim manuellen als auch beim automatischen Pipettieren muß bei der Flüssigkeitsaufnahme einerseits die Pipettenspitze in die Flüssigkeit eingetaucht werden, andererseits jedoch nur mit einer möglichst geringen Eintauchtiefe, weil der Fehler der Dosierung mit Eintauchtiefe steigt und bei einem tiefen Eintauchen die Pipettenspitze bzw. das die Flüssigkeit aufnehmende Gefäß beschädigt werden können. Bei manuellen Pipetten muß dies vom Benutzer durch genaues Kontrollieren des Eintauchens der Pipettenspitze sichergestellt werden. Bei automatischen Dosiervorrichtungen werden hierfür Überwachungseinrichtungen eingesetzt.

So ist es bereits bekannt, leitfähige Pipettenspitzen oder besondere leitfähige Sensoren zu verwenden, deren Annäherung an die Flüssigkeit durch eine Kapazitätsmessung oder deren Eintauchen in die Flüssigkeit durch eine Widerstandsmessung überwacht wird. Diese Lösungen sind jedoch an leitfähige Flüssigkeiten gebunden oder erfordern, daß die Sensoren kleine Abstände von den Flüssigkeiten haben oder in diese eintauchen. Bei leitfähigen Pipettenspitzen sind die Kosten für das Verbrauchsmaterial relativ hoch. Das Einführen besonderer Levelsensoren in Gefäße, in denen sich die Flüssigkeit befindet, kann bei der Behandlung der Proben stören.

Aus der WO 0042384 A1 ist ein Detektionssystem für Flüssigkeitsspiegel für den Einsatz in automatischen Workstations bekannt. Das System hat eine Beleuchtungsquelle und einen Fotodetektor, die auf die Flüssigkeit und in einem Winkel aufeinander gerichtet sind. Die Beleuchtungsquelle erzeugt einen Lichtstrahl, den der Fotodetektor detektieren kann, wenn er von der Flüssigkeitsoberfläche reflektiert wird. Das Ausgangssignal des Fotodetektors variiert entsprechend der Intensität der reflektierten Strahlung, die auf ihn trifft. Dieses Ausgangssignal variiert wiederum, wenn der Fotodetektor (und die Beleuchtungsquelle) sich der Flüssigkeitsoberfläche annähert, indem es zunächst zunimmt und dann abnimmt, da sich der reflektierte Lichtstrahl von der einen Seite auf die andere Seite des Fotodetektors bewegt.

Der Strahlengang der Optik wird durch die Öffnung eines Gefäßes hineingeführt, in dem sich die Flüssigkeit befindet. Der erforderliche Winkel zwischen dem einfallenden und dem ausfallenden Strahl begrenzt die Anwendung auf Gefäße, die einen verhältnismäßig großen Durchmesser bzw. eine verhältnismäßig geringe Tiefe aufweisen. Bei Gefäßen mit verhältnismäßig geringem Durchmesser bzw. verhältnismäßig großer Tiefe würde hingegen der Strahlengang am Öffnungsrand unterbrochen, so daß keine Messung mehr möglich wäre.

Davon ausgehend liegt der Erfindung die Aufgabe zugrunde, eine Vorrichtung und ein Verfahren zu schaffen, die die Ermittlung der Lage des Flüssigkeitsspiegels in Gefäßen mit verhältnismäßig geringem Durchmesser und/oder großer Tiefe begünstigt. Ferner liegt der Erfindung die Aufgabe zugrunde, ein Verfahren zum Ermitteln der Lage und/oder Identität von Objekten zur Verfügung zu stellen.

Die Aufgabe wird durch eine Vorrichtung mit den Merkmalen des Anspruches 1 gelöst. Ferner wird die Aufgabe durch Verfahren mit den Merkmalen der Ansprüche 5 und 7 gelöst. Vorteilhafte Ausgestaltungen der Vorrichtung und der Verfahren sind in den Unteransprüchen angegeben.

Die erfindungsgemäße Vorrichtung zur Ermittlung der Lage des Flüssigkeitsspiegels in Gefäßen an einer Vorrichtung zur Behandlung von Flüssigkeiten hat
- eine Beleuchtungseinrichtung (1 bis 6) zum Beleuchten einer punktförmigen Beleuchtungsstelle (7) im Raum,
- eine punktförmige Lichtempfangseinrichtung (9, 10) mit einem Fotodetektor (10) zum Liefern eines von der Intensität von empfangenem Licht abhängigen Messsignales,
- ein abbildendes System (6) zum Abbilden der Beleuchtungsstelle (7) auf die punktförmige Lichtempfangseinrichtung (9,10),
- eine Auswerteeinrichtung zum Erfassen der Annäherung einer Grenzfläche zwischen zwei Medien mit unterschiedlichen Bruchzahlen an die Beleuchtungsstellc (7) durch Auswerten der vom Fotodetektor (10) gelieferten Messsignale,
- eine Verstelleinrichtung zum Verstellen der relativen Lage von Beleuchtungsstelle (7) und Grenzfläche in Richtung der optischen Achse des abbildenden Systems (6), wobei
- die Auswerteeinrichtung zur Steuerung des Verstellens der relativen Lage von Beleuchtungsstelle (10) und Grenzfläche durch die Verstelleinrichtung ausgebildet ist,
- die Beleuchtungseinrichtung (1 bis 6) ebenfalls ein abbildendes System (6) umfasst, das das Licht einer punktförmigen Lichtquelle (1 bis 4) auf die Beleuchtungsstelle (7) abbildet, und
- das Licht der punktförmigen Lichtquelle (1 bis 4) über einen Strahlteiler (5) dem abbildenden System (6) zugeführt wird und dasselbe abbildende System (6) die Beleuchtungsstelle (7) über den Strahlteiler (5) auf die Lichtempfangseinrichtung (9, 10) abbildet, wobei
- der Abstand der Beleuchtungsstelle (7) von dem abbildenden System (6) 100 mm oder mehr beträgt.

Bei der erfindungsgemäßen Vorrichtung wird die etwa punktförmige Beleuchtungsstelle auf die etwa punktförmige Lichtempfangseinrichtung abgebildet. Infolgedessen ändert sich die Intensität der von der Lichtempfangseinrichtung empfangenen Lichtstrahlung und damit das vom Fotodetektor gelieferte Meßsignal, wenn eine Grenzfläche zwischen zwei Medien mit unterschiedlichen Brechzahlen in die Beleuchtungsstelle eintritt. Somit ist feststellbar, ob sich eine Grenzfläche in der Beleuchtungsstelle befindet oder nicht. Dies ermöglicht es, die Lage einer Grenzfläche festzustellen, die beispielsweise ein Flüssigkeitsspiegel, d.h. die Grenzfläche zwischen einer Flüssigkeit und Luft, sein kann. Ferner ermöglicht dies, die Lage einer Oberfläche eines Objektes festzustellen, die beispielsweise unbedeckt oder mit einem für das Licht der Beleuchtungseinrichtung transparenten Medium bedeckt sein kann (z.B. ein mit Flüssigkeit bedeckter Gefäßboden).

Für die Bestimmung der Lage einer Grenzfläche kann die relative Lage von Beleuehtungsstelle und Grenzfläche verändert werden, bis sich die Grenzfläche in der Beleuchtungsstelle befindet. Ferner ist es möglich, die Oberfläche eines Objektes mit der Beleuchtungsstelle abzutasten, um aufgrund einzelner Werte oder des Verlaufs des Meßsignales auf die Lage des gesamten Objektes und/oder seine Identität zu schließen.

Somit ist mit der erfindungsgemäßen Vorrichtung insbesondere die Höhe des Flüssigkeitsspiegels in Gefäßen (z.B. in Reaktionsgefäßen und in Vertiefungen von Mikrotiterplatten), die Lage und Identität von Gefäßen (z.B. von Reaktionsgefäßen und Mikrotiterplatten) und die Lage und Identität von Werkzeugen und Hilfsmitteln (z.B. Pipettenspitzen in einem Gestell) feststellbar. Da der Lichtstrahl der Beleuchtungseinrichtung und das abbildende System koaxial auf die Beleuchtungsstelle ausgerichtet werden können, ist ein berührungsloses Erfassen von Grenzschichten aus größerer Distanz und unter geringem seitlichem Raumbedarf möglich. Dies begünstigt das Erfassen des Flüssigkeitsspiegels in Gefäßen mit verhältnismäßig kleiner Öffnung und/oder verhältnismäßig großer Tiefe.

Es kann gezielt mit Licht einer Wellenlänge gearbeitet werden, für das eine Flüssigkeit (z.B. Wasser) undurchsichtig ist, um einen Flüssigkeitsspiegel frei von Störungen durch nahe Gefäßwände zu erfassen.

Erfaßbar sind sowohl diffus reflektierende Grenzflächen (z.B. matte Oberflächen) als auch im Wesentlichen gerichtet reflektierende Grenzflächen (z.B. glänzende Oberflächen oder Flüssigkeitsoberflächen). Vor allem bei im wesentlichen gerichtet reflektierenden Grenzflächen ist das Meßsignal besonders stark, wenn gemäß einer Ausgestaltung die Flächennormale am Ort der Abtastung der Grenzfläche durch die Beleuchtungsstelle etwa koaxial zum beleuchtenden Lichtstrahl und zur optischen Achse des abbildenden Systems ist.

Vorzugsweise umfaßt die Beleuchtungseinrichtung eine eigene Lichtquelle, die beispielsweise ein Laser, eine LED oder ein Glühlämpchen sein kann.

Die Beleuchtungsstelle kann von einem linienförmigen Lichtstrahl beleuchtet sein, der beispielsweise mittels eines Lasers erzeugt werden kann. Durch das abbildende System wird dann auf dem linienförmigen Lichtstrahl eine punktförmige Beleuchtungsstelle definiert, die auf die etwa punktförmige Lichtempfangseinrichtung abgebildet wird.

Nach einer Ausgestaltung umfaßt die Beleuchtungseinrichtung ebenfalls ein abbildendes System, das das Licht einer punktförmigen Lichtquelle auf die Beleuchtungsstelle abbildet. Hierdurch hat der beleuchtende Lichtstrahl (oder "Lichtbündel") in der Beleuchtungsstelle die größte Intensität. Zusammen mit der Abbildung der Beleuchtungsstelle auf die Lichtempfangseinrichtung führt dies zu einem besonders starken Meßsignal.

Nach einer Ausgestaltung wird das Licht der punktförmigen Lichtquelle über einen Strahlteiler dem abbildenden System zugeführt und bildet dasselbe abbildende System die Beleuchtungsstelle über den Strahlteiler auf die Lichtempfangseinrichtung ab. Hierdurch wird eine Auflichtmessung verwirklicht. Da nur ein abbildendes System vorhanden ist, ist der Aufwand verhältnismäßig gering.

Nach einer Ausgestaltung weist die Beleuchtungseinrichtung im Strahlengang der Lichtquelle eine Blende und/oder einen Lichtwellenleiter auf, deren Ausgang die punktförmige Lichtquelle bildet.

Nach einer Ausgestaltung hat der die Beleuchtungsstelle beleuchtende Lichtstrahl einen Aperturwinkel von 8° oder darunter, so daß der Lichtstrahl ohne Abblendung im Randbereich in Gefäße mit verhältnismäßig kleinem Öffnungsdurchmesser bzw. großer Tiefe einführbar ist.

Nach einer Ausgestaltung beträgt der Abstand der Beleuchtungsstelle von dem abbildenden System 100 mm oder mehr, wodurch eine berührungslose Messung des Flüssigkeitsspiegels in vielen gebräuchlichen Gefäßen möglich ist.

Grundsätzlich kann die punktförmige Lichtempfangseinrichtung ein Fotodetektor mit besonders kleiner lichtempfindlicher Fläche sein. Nach einer Ausgestaltung weist die punktförmige Lichtempfangseinrichtung eine Blende auf, durch die die Größe der Empfängerfläche bestimmt wird.

Nach einer Ausgestaltung weist die Auswerteeinrichtung Mittel zum Filtern des vom Fotodetektor gelieferten Meßsignales auf. Hierdurch kann ein Rauschen des Meßsignals unterdrückt und Fremdlichteinfluss verringert werden. Nach einer Ausgestaltung ist die Vorrichtung eine automatische Vorrichtung zur Behandlung von Flüssigkeiten (z.B. eine Dosierstation oder eine Workstation). In einer solchen automatischen Vorrichtung können aufgrund der Erfassung der Lage und/oder Identität von Flüssigkeiten und/oder Objekten Abläufe gesteuert werden, beispielsweise das Eintauchen von Pipettenspitzen in Gefäße, die Behandlung von Flüssigkeiten in bestimmten Gefäßen etc.

Nach einer Ausgestaltung hat die Vorrichtung eine Verstelleinrichtung zum Verstellen der relativen Lage von Beleuchtungsstelle und Grenzfläche in Richtung der optischen Achse des abbildenden Systems und/oder quer dazu.

Die Verstellung der relativen Lage von Beleuchtungsstelle und Grenzfläche kann auf verschiedene Weisen von der Verstelleinrichtung bewirkt werden. Nach einer Ausgestaltung ist mittels der Verstelleinrichtung die relative Lage der gesamten Optik, die von der Beleuchtungseinrichtung, dem abbildenden System und der Lichtempfangseinrichtung gebildet ist, und der Grenzfläche verstellbar. Dies kann sowohl für die Verstellung in Richtung der optischen Achse des abbildenden Systems als auch für die Verstellung quer dazu genutzt werden. Dafür kann die gesamte Optik und/oder die Grenzfläche, z.B. mittels eines Objektträgers, verlagert werden. Für das Verstellen in Richtung der optischen Achse hat die Verstelleinrichtung nach einer Ausgestaltung ein im abbildenden System angeordnetes Zoom-Objektiv. Für die Verstellung quer zur optischen Achse kann die Verstelleinrichtung mindestens einen Scan-Spiegel im abbildenden System haben.

Nach einer weiteren Ausgestaltung ist die Verstelleinrichtung motorgetrieben, beispielsweise um in eine automatische Vorrichtung zum Behandeln von Flüssigkeiten integriert zu werden.

Nach einer Ausgestaltung steuert die Auswerteeinrichtung das Verstellen der relativen Lage von Beleuchtungsstelle und Grenzfläche durch die Verstelleinrichtung. Dann kann das Verstellen in Abhängigkeit von den Meßsignalen erfolgen, beispielsweise um die Beleuchtungsstelle auf die Grenzfläche einzustellen und/oder entlang der Grenzfläche zu verfahren.

Ferner ist Gegenstand der Erfindung ein Verfahren zum Ermitteln der Lage des Flüssigkeitsspiegels in Gefäßen in einer Dosierstation oder Workstation
- mittels einer Vorrichtung mit einer Beleuchtungseinrichtung (1 bis 6) zum Beleuchten einer punktförmigen Beleuchtungsstelle (7), einer punktförmigen Lichtempfangseinrichtung (9, 10) mit einem Photodetektor (10) zum Liefern eines von der Intensität des empfangenen Lichts abhängigen Messsignals, einem abbildenden System (6) zum Abbilden der Beleuehtungsstelle (7) auf die punktförmige Lichtempfangseinrichtuug (9, 10) und einer Auswerteeinrichtung zum Erfassen der Annäherung einer Grenzfläche zwischen zwei Medien mit unterschiedlichen Brechungszahlen an die Beleuchtungsstelle (7) durch Auswerten der vom Photodetektor gelieferten Messsignale,
- bei dem die relative Lage von Beleuchtungsstelle und Grenzfläche in Richtung der optischen Achse des abbildenden Systems (6) und/oder quer dazu verändert wird und dabei das Maximum des Messsignals ermittelt und die Lage der Beleuchtungsstelle (7) beim Maximum des Messsignals als Lage des Flüssigkeitsspiegels bestimmt wird.

Ferner ist Gegenstand der Erfindung ein Verfahren zu der Ermittlung der Lage und/oder Identität von Objekten in Dosierstationen oder Workstations
- mittels einer Vorrichtung mit einer Beleuchtungseinrichtung (1 bis 6) zum Beleuchten einer punktförmigen Beleuchtungsstelle (7), einer punktförmigen Lichtempfangseinrichtung (9, 10) mit einem Photodetektor (10) zum Liefern eines von der Intensität des empfangenen Lichts abhängigen Messsignals, einem abbildenden System (6) zum Abbilden der Beleuchtungsstelle (7) auf die punktförmige Lichtempfangseinrichtung (9, 10) und einer Auswerteeinrichtung zum Erfassen der Annäherung einer Grenzfläche zwischen zwei Medien mit unterschiedlichen Brechungszahlen an die Beleuchtungsstelle (7) durch Auswerten der vom Photodetektor gelieferten Messsignale,
- bei dem die Beleuchtungsstelle (7) parallel zu einer Grenzfläche des Objektes verlagert, einzelne Werte oder der Verlauf des Messsignals beim Verlagern ermittelt und die Lage und/oder Identität des Objektes aufgrund der Werte oder des Verlaufs des Messsignals ermittelt wird.

Nach dem erfindungsgemäßen Verfahren zum Betreiben einer erfindungsgemäßen Vorrichtung wird
- der Abstand zwischen der Beleuchtungsstelle und einer Grenzfläche verändert, das Maximum des Meßsignals beim Verändern des Abstandes ermittelt und die Lage der Beleuchtungsstelle beim Maximum des Meßsignals als Lage des Flüssigkeitsspiegels bestimmt und/oder
- die Beleuchtungsstelle im Wesentlichen parallel zur Grenzfläche verlagert, einzelne Werte oder der Verlauf des Meßsignals beim Verlagern ermittelt und die Lage und/oder Identität der Grenzfläche aufgrund der Werte oder des Verlaufs des Meßsignals ermittelt.

Mit diesem Verfahren ist die Lage eines Flüssigkeitsspiegels und/oder eines festen Objektes und/oder die Identität eines festen Objektes bestimmbar. Mit der Grenzfläche ist zugleich die Flüssigkeit oder das Objekt identifiziert.

Nach einer Ausgestaltung wird die Lage und/oder Identität aufgrund eines Vergleichs der Meßwerte mit Referenzdaten über die Gestaltung und/oder die Reflexionseigenschaften der Grenzfläche ermittelt. Die Referenzdaten können beispielsweise gespeichert sein.

Schließlich wird nach einer Ausgestaltung die Beleuchtungsstelle auf eine Referenzfläche eingestellt und ein Referenzsignal gemessen, das als Bezugspunkt für das Meßsignal dient.

Die Erfindung wird nachfolgend mit Bezug auf die anliegenden Zeichnungen eines Ausführungsbeispieles näher erläutert. In den Zeichnungen zeigen:
- Fig. 1: grobschematischer Aufbau einer Vorrichtung zum Erfassen von Grenzflächen;
- Fig. 2: Lagemessung an einer Wasseroberfläche mit verschiedenen Blenden in einem Diagramm mit dem Abstand der Wasseroberfläche auf der Abszisse, dem Meßsignal auf der Ordinate und dem Blendendurchmesser als Kurvenparameter;
- Fig. 3: maximales Signal der Lichtempfangseinrichtung bei Reflexionsmessung an verschiedenen Oberflächen mit der Oberflächenbeschreibung auf der Abszisse und dem Meßsignal auf der Ordinate;
- Fig. 4: horizontale Abtastung einer Mikrotiterplatte mit 384 Wells in einem Diagramm mit der Abtaststrecke auf der Abszisse und dem Meßsignal auf der Ordinate;
- Fig. 5: Abtastsignal eines Barcodes in einem Diagramm mit der Abtaststrecke auf der Abszisse und dem Meßsignals auf der Ordinate;
- Fig. 6: Barcode auf Etikett mit Aluminiumbeschichtung, der der Abtastung gemäß Fig. 5 zugrunde liegt.

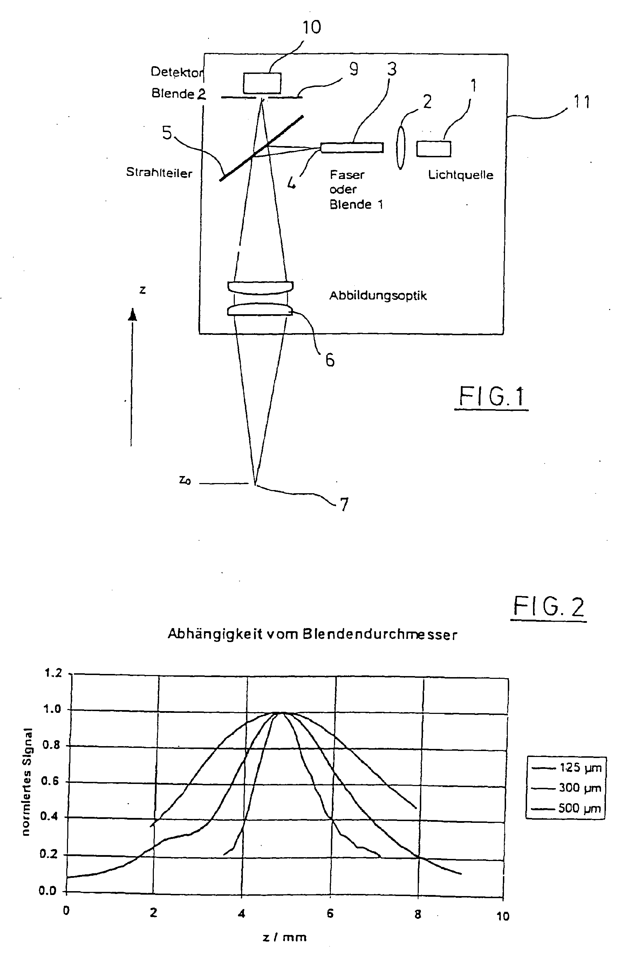

Gemäß Fig. 1 hat die Vorrichtung eine Lichtquelle 1, die einen Lichtstrahl durch eine Linse 2 auf eine Blende 3 oder einen Lichtwellenleiter richtet.

Die Öffnung 4 der Blende 3 bzw. des Lichtwellenleiters bildet infolgedessen eine punktförmige Lichtquelle, aus der das Licht über einen Strahlteiler 5 auf eine Abbildungsoptik 6 gespiegelt wird. Von der Abbildungsoptik 6, die ein Objektiv umfaßt, wird das Licht in einem Abstand z₀ fokussiert. Im Fokus befindet sich somit eine punktförmige Beleuchtungsstelle 7.

Die Abbildungsoptik 6 bildet die Beleuchtungsstelle 7 durch den Strahlteiler 5 auf die Öffnung 8 einer Blende 9 ab, hinter der sich ein Fotodetektor 10 befindet. Die Öffnung 8 der Blende 9 hat denselben Durchmesser wie die Öffnung 4 der Blende 3. Außerdem haben die Öffnungen 8, 4 dieselbe optische Entfernung vom Strahlteiler 5,

Befindet sich an der Beleuchtungsstelle eine diffus oder gerichtet reflektierende Fläche (letztere etwa senkrecht zur optischen Achse der Abbildungsoptik 6 ausgerichtet), so gelangt reflektiertes Licht durch die Blende 9 auf dem Fotodetektor 10. Wird die gesamte Optik 11 in z-Richtung bewegt, so ändert sich die vom Fotodetektor 10 gemessene Lichtintensität. Sie wird maximal, wenn sich die reflektierende Grenzfläche genau in der Beleuchtungsstelle 7 befindet, d.h. im Abstand z₀ von der Abbildungsoptik 6.

Der Abstand z₀ einer Grenzfläche bzw. die Lage der Grenzfläche wird also durch Abtasten in z-Richtung bestimmt.

Für das Erfassen einer Flüssigkeitsoberfläche wird der Lichtstrahl durch eine Gefäßöffnung in eine Gefäß eingeführt. Bei einem Gesamtöffnungswinkel (Aperturwinkel) des Lichtstrahls von ca. 8° und einem Abstand z₀ von 100 mm muß der freie Durchmesser der Öffnung des Gefäßes ca. 14 mm betragen, wenn in einer Tiefe z₀ im Gefäß gemessen werden soll.

Beim Abtasten (Scannen) in Querrichtung zur optischen Achse der Abbildungsoptik 6 (x-Richtung) zeigt eine Intensitätsänderung eine Erhebung oder Vertiefung der abgescanntcn Fläche an, aber auch eine Änderung des Reflexionsgrades.

Der Gesamtöffnungswinkel des Lichtstrahles und die Durchmesser der Öffnungen 4, 8 der Blenden 3, 9 beeinflussen die Meßgenauigkeit der Vorrichtung. Sie wird um so größer, je größer der Gesamtöffnungswinkel und je kleiner der Durchmesser ist.

Bei einem Ausführungsbeispiel ist die Lichtquelle 1 eine Laserdiode mit einer Wellenlänge von 670 Nanometer, die über eine Lichtleitfaser mit 125 µm Durchmesser angekoppelt ist. Der Durchmesser der Öffnung 6 der Blende 7 beträgt ca. 100 µm. Als Fotodetektor dient eine Si-Fotodiode VTB 5051 von EG & G FVCTEC.

Die Fig. 2 zeigt die Erhöhung der Meßgenauigkeit mit abnehmendem Durchmesser der Blendenöffnung bei Messung der Lage einer Wasseroberfläche. Der Nullpunkt von z ist willkürlich gewählt.

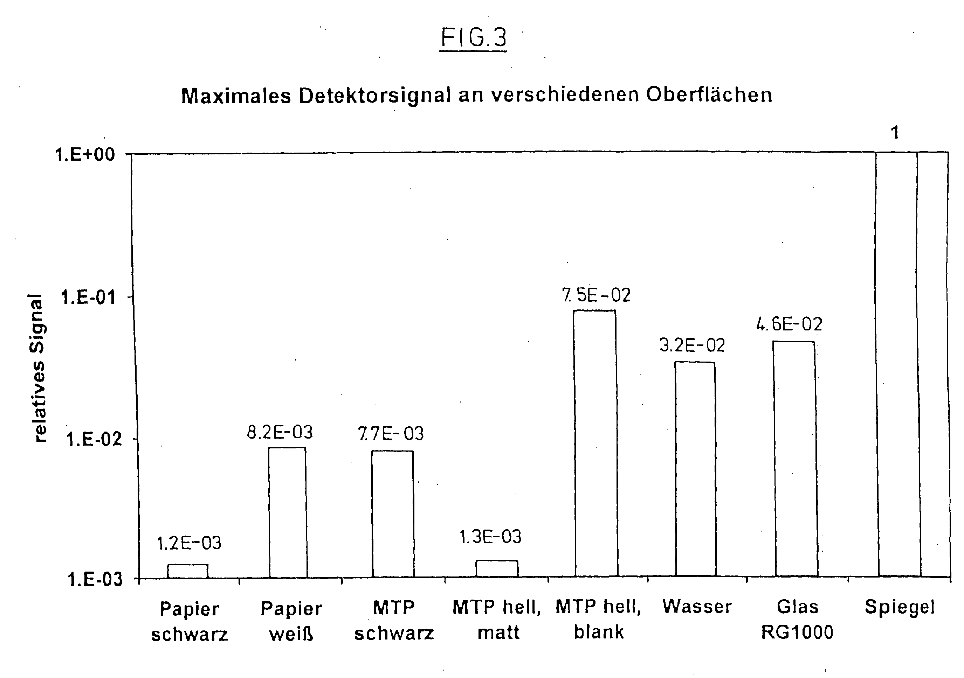

Da unterschiedliche Grenzflächen verschieden stark reflektieren, überstreicht die Höhe der Meßsignale einen weiten Bereich. Mit der oben beschriebenen Vorrichtung wurden an verschiedenen Grenzflächen am Fotodetektor die in Fig. 3 dargestellten Ströme im Intensitätsmaximum gemessen. Ein Objekt kann anhand der Meßsignale identifiziert werden, die von verschiedenen in ihm enthaltenen Grenzflächen herrühren.

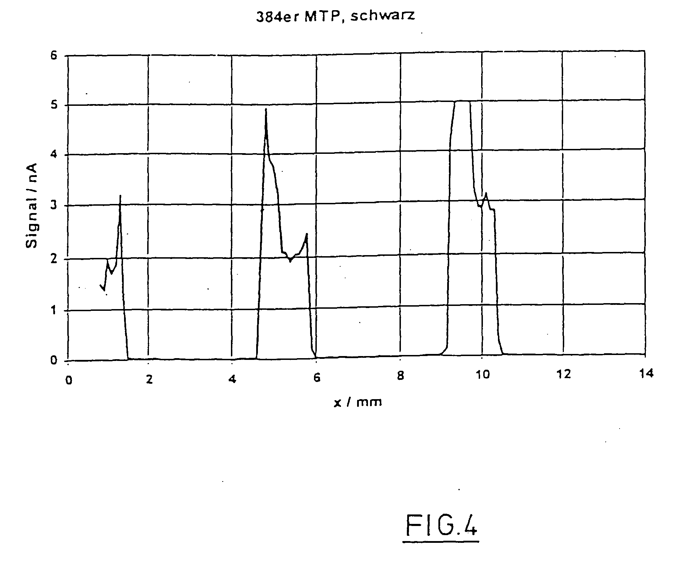

In Fig. 4 ist der am Fotodetektor 10 gemessene Strom beim Abtasten der Oberfläche einer schwarzen Mikrotiterplatte mit 384 Aufnahmen dargestellt. Die Minima des Stroms indizieren das Abtasten einer Aufnahme (sog. "well") und die Peaks dazwischen die Oberflächenabschnitte zwischen den Aufnahmen. Durch Auswerten des Meßsignals ist feststellbar, daß die charakteristischen Abmessungen einer 384er Mikrotiterplatte vorliegen. Ein Automat kann somit das Vorliegen einer 384er Mikrotiterplatte erkennen und darauf Dosiervorgänge ausrichten.

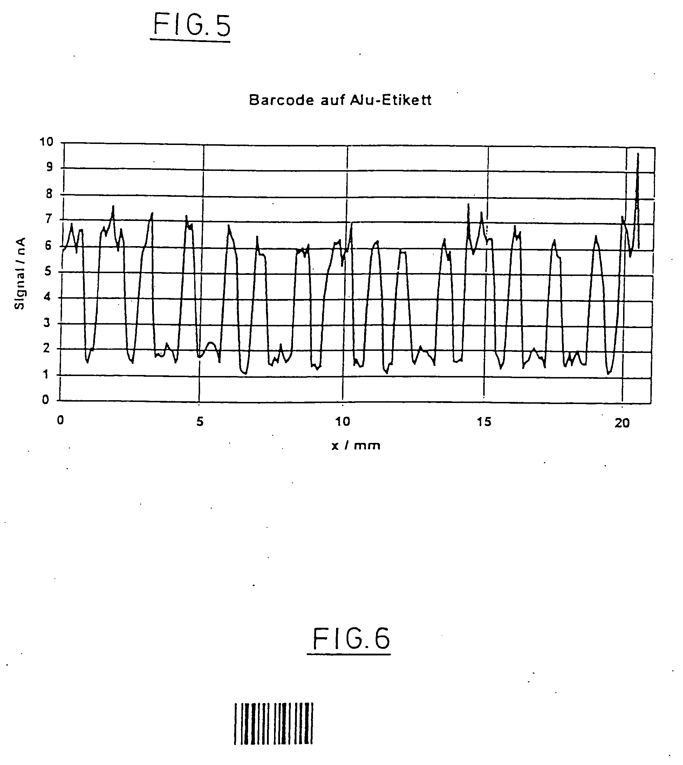

Die Fig. 5 zeigt den am Fotodetektor 10 gemessenen Strom beim Abtasten der Oberfläche des Barcodes, der in Fig. 6 gezeigt ist. Dabei sind die Internsitätsminima den dunklen und Intensitätsmaxima den hellen Streifen des Barcodes zugeordnet. Dies ermöglicht die automatische Identifizierung eines Objektes, das mit Barcodes gekennzeichnet ist.

### Es folge weitere Beispiele der Erfindung:

1. Vorrichtung zur Behandlung von Flüssigkeiten mit
   - einer Beleuchtungseinrichtung (1 bis 6) zum Beleuchten einer etwa punktförmigen Beleuchtungsstelle (7) im Raum,
   - einer etwa punktförmigen Lichtempfangseinrichtung (9, 10) mit einem Fotodetektor (10) zum Liefern eines von der Intensität des empfangenen Lichts abhängigen Meßsignales,
   - einem abbildenden System (6) zum Abbilden der Beleuchtungsstelle (7) auf die etwa punktförmige Lichtempfangseinrichtung (9, 10) und
   - einer Auswerteeinrichtung zum Erfassen der Annäherung einer Grenzfläche zwischen zwei Medien mit unterschiedlichen Brechzahlen an die Beleuchtungsstelle (7) durch Auswerten der vom Fotodetektor (10) gelieferten Meßsignale.
2. Vorrichtung nach Beispiel 1, bei der der die Beleuchtungsstelle (10) beleuchtende Lichtstrahl und die optische Achse des abbildenden Systems (6) etwa koaxial auf die Beleuchtungsstelle (10) gerichtet sind.
3. Vorrichtung nach Beispiel 2, bei der der die Beleuchtungsstelle (10) beleuchtende Lichtstrahl und die optische Achse des abbildenden Systems (6) etwa koaxial zu einer Flächennormalen auf die Grenzfläche ausgerichtet sind.
4. Vorrichtung nach einem der Beispiele 1 bis 3, bei der die Beleuchtungseinrichtung (1 bis 6) eine Lichtquelle (1) umfaßt.
5. Vorrichtung nach Beispiel 4, bei der die Lichtquelle (1) ein Laser, eine LED oder ein Glühlämpchen ist.
6. Meßvorrichtung nach einem der Beispiele 1 bis 5, bei der die Beleuchtungseinrichtung (1 bis 6) ebenfalls ein abbildendes System (6) umfaßt, das das Licht einer punktförmigen Lichtquelle (1 bis 4) auf die Beleuchtungsstelle (10) abbildet.
7. Vorrichtung nach Beispiel 6, bei der das Licht der punktförmigen Lichtquelle (1 bis 4) über einen Strahlteiler (5) dem abbildenden System (6) zugeführt wird und dasselbe abbildende System (6) die Beleuchtungsstelle (10) über den Strahlteiler (5) auf die Lichtempfangseinrichtung (9,10) abbildet.
8. Vorrichtung nach Beispiel 6 oder 7, bei der die Beleuchtungseinrichtung (1 bis 6) im Strahlengang der Lichtquelle (1) eine Blende (3) und/oder einen Lichtwellenleiter aufweist.
9. Vorrichtung nach einem der Beispiele 1 bis 8, bei der der die Beleuchtungsstelle (10) beleuchtende Lichtstrahl einen Aperturwinkel von 8° oder darunter aufweist.
10. Vorrichtung nach einem der Beispiele 1 bis 9, bei der der Abstand der Beleuchtungsstclle (10) von dem abbildenden System (6) 100 mm oder mehr beträgt.
11. Vorrichtung nach einem der Beispiele 1 bis 10, bei der die punktförmige Lichtempfangseinnchtung (9,10) eine Blende (9) aufweist.
12. Vorrichtung nach einem der Beispiele 1 bis 11, bei der die Auswerteeinrichtung Mittel zum Filtern des vom Fotodetektor (10) gelieferten Meßsignals aufweist.
13. Vorrichtung nach einem der Beispiele 1 bis 12, die eine Verstelleinrichtung zum Verstellen der relativen Lage von Beleuchtungsstelle (10) und Grenzfläche in Richtung der optischen Achse des abbildenden Systems (6) und/oder quer dazu aufweist.
14. Vorrichtung nach Beispiel 13, bei der mittels der Verstelleinrichtung die relative Lage der von der Beleuchtungseinrichtung (1 bis 6), dem abbildenden System (6) und der Lichtempfangseinrichtung (9, 10) gebildeten Optik (11) und der Grenzfläche verstellbar ist
15. Vorrichtung nach einem der Beispiele 13 oder 14, bei der die Verstelleinrichtung ein Zoom-Objektiv (6) im abbildenden System aufweist.
16. Vorrichtung nach einem der Beispiele 13 bis 15, bei der die Verstelleinrichtung motorgetrieben ist.
17. Vorrichtung nach Beispiel 16, bei der die Auswerteeinrichtung das Verstellen der relativen Lage von Beleuchtungsstelle (10) und Grenzfläche durch die Verstelleinrichtung steuert.
18. Vorrichtung nach einem der Beispiele 1 bis 17, die die Lage von Flüssigkeitsspiegeln und/oder von Objekten und/oder die Identität von Objekten erfaßt.
19. Vorrichtung nach Beispiel 18, die die Lage von Flüssigkeitsspiegeln in Reaktionsgefäßen und/oder in Mikrotiterplatten und/oder die Lage von Reaktionsgefäßen und/oder von Mikrotiterplatten und/oder von Pipettenspitzen und/oder die Identität von Reaktionsgefäßen und/oder von Mikrotiterplatten und/oder von Pipettenspitzen erfaßt.
20. Vorrichtung nach einem der Beispiele 1 bis 19, die eine automatische Vorrichtung ist.
21. Vorrichtung nach einem der Beispiele 18 bis 20, die Objekte mit optisch abtastbaren Markierungen zu ihrer Identifizierung umfaßt.
22. Verfahren zum Betreiben einer Vorrichtung nach einem der Beispiele 1 bis 21, bei dem
   - der Abstand zwischen der Beleuchtungsstelle (7) und einer Grenzfläche verändert, das Maximum des Meßsignals beim Verändern des Abstandes ermittelt und die Lage der Beleuchtungsstelle (7) beim Maximum des Meßsignals als Lage des Flüssigkeitsspiegels bestimmt wird und/oder
   - die Beleuchtungsstelle (7) im Wesentlichen parallel zur Grenzfläche verlagert, einzelne Werte oder der Verlauf des Meßsignals beim Verlagern ermittelt und die Lage und/oder Identität der Grenzfläche aufgrund der Werte oder des Verlaufs des Meßsignals ermittelt wird.
23. Verfahren nach Beispiel 22, bei dem die Lage und/oder Identität der Grenzfläche aufgrund eines Vergleichs der Meßwerte mit Referenzdaten über die Gestaltung und/oder die Reflexionseigenschaften der Grenzfläche ermittelt wird.
24. Verfahren nach Beispiel 22 oder 23, bei dem die Beleuchtungsstelle (9) auf eine Referenzfläche eingestellt und das Referenzsignal gemessen wird.

## Patentansprüche

1. Vorrichtung zur Ermittlung der Lage des Flüssigkeitsspiegels in Gefäßen an einer Vorrichtung zur Behandlung von Flüssigkeiten mit
- einer Beleuchtungseinrichtung (1 bis 6) zum Beleuchten einer punktförmigen Beleuchtungsstelle (7) im Raum,
- einer punktförmigen Liehtempfangseinrichtung (9, 10) mit einem Fotodetektor (10) zum Liefern eines von der Intensität von empfangenem Licht abhängigen Messsignals,
- einem abbildenden System (6) zum Abbilden der Beleuchtungsstelle (7) auf die punktförmige Lichtempfangseinrichtung (9, 10),
- einer Auswerteeinrichtung zum Erfassen der Annäherung einer Grenzfläche zwischen zwei Medien mit unterschiedlichen Brechzahlen an die Beleuchtungsstelle (7) durch Auswerten der vom Fotodetektor (10) gelieferten Messsignale,
- einer Verstelleinrichtung zum Verstellen der relativen Lage von Beleuchtungsstelle (7) und Grenzfläche in Richtung der optischen Achse des abbildenden Systems (6), wobei
- die Auswerteeinrichtung zur Steuerung des Verstellens der relativen Lage von Beleuchtungsstelle (10) und Grenzfläche durch die Verstelleinrichtung ausgebildet ist,
- die Beleuchtungseinrichtung (1 bis 6) ebenfalls ein abbildendes System (6) umfasst, das das Licht einer punktförmigen Lichtquelle (1 bis 4) auf die Beleuchtungsstelle (7) abbildet, und
- das Licht der punktförmigen Lichtquelle (1 bis 4) über einen Strahlteiler (5) dem abbildenden System (6) zugeführt wird und dasselbe abbildende System (6) die Beleuchtungsstelle (7) über den Strahlteiler (5) auf die Lichtempfangseinrichtung (9, 10) abbildet, **dadurch gekennzeichnet, dass**
- der Abstand der Beleuchtungsstelle (7) von dem abbildenden System (6) 100 mm oder mchr beträgt.

2. Vorrichtung nach Anspruch 1, bei der die Verstelleinrichtung ein Zoom-Objektiv ist.

3. Vorrichtung nach einem der Ansprüche 1 bis 2, bei der die Auswerteeinrichtung ein Mittel zum Filtern des vom Fotodetektor gelieferten Messsignals aufweist.

4. Vorrichtung nach einem der Ansprüche 1 bis 3, bei der ein die Beleuchtungsstelle (7) beleuchtender Lichtstrahl der Beleuchtungseinrichtung (1 bis 6) einen Aperturwinkel von 8° oder darunter aufweist.

5. Verfahren zum Ermitteln der Lage des Flüssigkeitsspiegels in Gefäßen in einer Dosierstation oder Workstation
- mittels einer Vorrichtung mit einer Beleuchtungseinrichtung (1 bis 6) zum Beleuchten einer punktförmigen Beleuchtungsstelle (7), einer punktförmigen Lichtempfangseinrichtung (9, 10) mit einem Photodetektor (10) zum Liefern eines von der Intensität des empfangenen Lichts abhängigen Messsignals, einem abbildenden System (6) zum Abbilden der Beleuchtungsstelle (7) auf die punktförmige Lichtempfangseinrichtung (9, 10) und einer Auswerteeinrichtung zum Erfassen der Annäherung einer Grenzfläche zwischen zwei Medien mit unterschiedlichen Brechungszahlen an die Beleuchtungsstelle (7) durch Auswerten der vom Photodetektor gelieferten Messsignale,
- bei dem die relative Lage von Beleuchtungsstelle und Grenzfläche in Richtung der optischen Achse des abbildenden Systems (6) und/oder quer dazu verändert wird und dabei das Maximum des Messsignals ermittelt und die Lage der Beleuchtungsstelle (7) beim Maximum des Messsignals als Lage des Flüssigkeitsspiegels bestimmt wird.

6. Verfahren nach Anspruch 5,
- bei dem die Beleuchtungseinrichtung (1 bis 6) die Beleuchtungsstelle (7) mit Licht einer Wellenlänge, für die Wasser undurchsichtig ist, beleuchtet.

7. Verfahren zu der Ermittlung der Lage und/oder Identität von Objekten in Dosierstationen oder Workstations
- mittels einer Vorrichtung mit einer Beleuchtungseinrichtung (1 bis 6) zum Beleuchten einer punktförmigen Beleuchtungsstelle (7), einer punktförmigen Lichtempfangseinrichtung (9, 10) mit einem Photodetektor (10) zum Liefern eines von der Intensität des empfangenen Lichts abhängigen Messsignals, einem abbildenden System (6) zum Abbilden der Beleuchtungsstelle (7) auf die punktförmige Lichtempfangseinrichtung (9, 10) und einer Auswerteeinrichtung zum Erfassen der Annäherung einer Grenzfläche zwischen zwei Medien mit unterschiedlichen Brechungszahlen an die Beleuchtungsstelle (7) durch Auswerten der vom Photodetektor gelieferten Meßsignale,
- bei dem die Beleuchtungsstelle (7) im Wesentlichen parallel zu einer Grenzfläche des Objektes verlagert, einzelne Werte oder der Verlauf des Messsignals beim Verlagern ermittelt und die Lage und/oder Identität des Objektes aufgrund der Werte oder des Verlaufs des Messsignals ermittelt wird.

8. Verfahren nach Anspruch 7, bei dem die Lage und/oder die Identität von Gefäßen, Werkzeugen und/oder Hilfsmitteln ermittelt wird.

9. Verfahren nach Anspruch 7 oder 8, bei dem die Lage und/oder Identität von Objekten aufgrund eines Vergleichs der Messwerte mit Referenzdaten über die Gestaltung und/oder die Reflexionseigenschaften der Grenzfläche der Objekte ermittelt wird.

10. Verfahren nach einem der Ansprüche 5 bis 9, mit dem zusätzlichen Schritt der Einstellung der Beleuchtungsstelle (7) auf eine Referenzfläche und Messung eines Referenzsignals, wobei dieses als Bezugspunkt für das Messsignal dient.

11. Verfahren nach einem der Ansprüche 7 bis 10, bei dem der Abstand zwischen der Beleuchtungsstelle (7) und der Grenzfläche des Objektes verändert, das Maximum des Messsignals beim Verändern des Abstandes ermittelt und die Lage der Beleuchtungsstelle (7) beim Maximum des Messsignals als Lage der Grenzfläche bestimmt wird und die Beleuchtungsstelle im Wesentlichen auf der Grenzfläche verlagert wird.

12. Verfahren nach einem der Ansprüche 7 bis 11, bei dem die Oberfläche eines Barcodes auf einem Objekt abgetastet wird.

13. Verfahren nach einem der Ansprüche 5 bis 12, bei dem die Lage des Flüssigkeitsspiegels in Gefäßen ermittelt wird.

14. Verfahren nach einem der Ansprüche 5 bis 6 und einem der Ansprüche 7 bis 13.
